# EUROPÄISCHE PATENTSCHRIFT

(11) **EP 3 711 468 B1**
(45) Veröffentlichungstag und Bekanntmachung des Hinweises auf die Patenterteilung: **10.01.2024**
(21) Anmeldenummer: 20401018.5
(22) Anmeldetag: 11.03.2020
(51) Int. Cl.: A01C 7/10, A01C 17/00

(54) **VERFAHREN ZUM ERMITTELN DES VERSCHMUTZUNGSZUSTANDS ZUMINDEST EINES SENSORS EINER LANDWIRTSCHAFTLICHEN STREUMASCHINE UND LANDWIRTSCHAFTLICHE MASCHINE DAZU**
METHOD FOR DETERMINING THE CONTAMINATION STATE OF AT LEAST ONE SENSOR OF AN AGRICULTURAL SPREADING MACHINE AND AGRICULTURAL MACHINE THEREFOR
PROCÉDÉ DE DÉTERMINATION DE L'ÉTAT D'ENCRASSEMENT D'AU MOINS UN CAPTEUR D'UN ÉPANDEUR AGRICOLE ET MACHINE AGRICOLE ASSOCIÉE

(30) Priorität: 20.03.2019 DE 102019107123
(43) Veröffentlichungstag der Anmeldung: 23.09.2020
(73) Patentinhaber: Amazonen-Werke H. Dreyer SE & Co. KG, 49205 Hasbergen (DE)
(72) Erfinder: Wessels, Thomas, 49080 Osnabrück (DE); Große Brinkhaus, Andre, 48149 Münster (DE)

(56) Entgegenhaltungen:
- EP-A1- 3 326 440
- EP-A2- 1 275 282
- EP-A2- 2 783 560
- US-A1- 2018 231 449

## Beschreibung

Die Erfindung betrifft ein Verfahren zum Ermitteln des Verschmutzungszustands zumindest eines Sensors einer landwirtschaftlichen Streumaschine nach dem Oberbegriff des Patentanspruchs 1 und eine landwirtschaftliche Streumaschine nach dem Oberbegriff des Patentanspruchs 13.

Moderne landwirtschaftliche Streumaschinen, wie beispielsweise Düngerstreuer, weisen häufig Sensoren auf, über welche das Flugverhalten des abgeworfenen Streuguts erfasst werden kann. Eine derartige landwirtschaftliche Streumaschine ist beispielsweise in der Druckschrift DE 10 2013 103 060 A1 offenbart. Die EP 1 275 282 A2 offenbart eine Streumaschine zur berührungslosen Überwachung des ausgebrachten Massenstroms.

Während eines Streuvorgangs können die Sensoren entsprechender landwirtschaftlicher Streumaschinen stark verschmutzen. Die Schmutzpartikel an den Sensoren der landwirtschaftlichen Streumaschine können zu einer erheblichen Signalverfälschung führen, sodass Regelungs- oder Steuerungsroutinen, welche die Messwerte dieser Sensoren verwenden, beeinträchtigt werden. Dies gilt insbesondere bei einer ungleichmäßigen Verschmutzung der Sensoren, welche zu einer Fehlaufzeichnung des Flugverhaltens des abgeworfenen Streuguts führt.

Aus dem Stand der Technik sind bereits verschiedene Maßnahmen bekannt, um derartige Sensorverschmutzungen zu vermeiden. Beispielsweise schlägt die Druckschrift DE 10 2015 011 496 A1 die Einhausung von Sensoren vor, sodass diese vor Schmutzpartikeln geschützt werden. Die Druckschrift DE 10 2014 106 777 A1 offenbart eine Streumaschine, deren Sensoren Reinigungseinheiten zugeordnet sind, damit entsprechende Sensorverschmutzungen entfernt werden können. In der US 2018/231449 wird eine Kalibrierung zur Kompensation der Verschmutzung optischer Sensoren offenbart.

Diese und andere Lösungen ermöglichen es jedoch bisher nicht, den Verschmutzungszustand der Sensoren zu erfassen, sodass eine optische Überprüfung der Sensoren durch einen Benutzer erforderlich ist.

Die der Erfindung zugrundeliegende Aufgabe besteht somit darin, die Verschmutzung zumindest eines Sensors einer landwirtschaftlichen Streumaschine, welcher zum Aufzeichnen des Flugverhaltens des abgeworfenen Streuguts eingesetzt wird, technisch erfassen zu können.

Die Aufgabe wird gelöst durch ein Verfahren der eingangs genannten Art, wobei im Rahmen des erfindungsgemäßen Verfahrens ein Sollwertebereich für jeden der mehreren Sensoren während eines Kalibriervorgangs durch eine Auswerteeinrichtung beim Ausbringen von Streugut auf eine landwirtschaftliche Nutzfläche ermittelt wird und die durch die mehreren Sensoren aufgezeichneten Messwerte hinsichtlich des Verlassens des für den jeweiligen Sensor ermittelten Sollwertebereichs zum Identifizieren einer Sensorverschmutzung durch die Auswerteeinrichtung überwacht werden, wobei die Sensoren als Radarsensoren ausgebildet sind und auf einen von der Streumaschine durch den Streugutabwurf erzeugten Streufächer ausgerichtet sind.

Die Erfindung macht sich die Erkenntnis zunutze, dass eine Werteüberwachung der das Flugverhalten des abgeworfenen Streuguts erfassenden Sensoren ermöglicht wird, sobald Sollwertebereiche für die jeweiligen Sensoren bekannt sind, welche einer entsprechenden Überwachung zugrunde gelegt werden können. Entsprechende Sollwertebereiche, welche der Messwertüberwachung zugrunde gelegt werden können, können im Rahmen eines Kalibriervorgangs beim Ausbringen von Streugut auf eine landwirtschaftliche Nutzfläche erfasst werden. Hierbei ist insbesondere sicherzustellen, dass während des Kalibriervorgangs keine Sensorverschmutzungen vorliegen. Die während des Kalibriervorgangs aufgezeichneten Referenzmesswerte beziehen sich also auf Messwerte, welche erwartet werden können, wenn die Sensoren der landwirtschaftlichen Streumaschine nicht verschmutzt sind. Sobald die Messwerte eines Sensors somit einen im Rahmen des Kalibriervorgangs ermittelten Sollwertebereich verlassen, kann also von einer Verschmutzung des entsprechenden Sensors ausgegangen werden. Das Verfahren erlaubt somit nicht nur eine einfache Verschmutzungsdetektion, sondern auch die Identifizierung des verschmutzten Sensors. Somit kann beispielsweise eine gezielte Sensorreinigung veranlasst oder eine gezielte Sensorwertkorrektur vorgenommen werden.

Die Auswerteeinrichtung, welche die Sollwertebereiche ermittelt und die Messwerte der Sensoren überwacht, ist vorzugsweise Bestandteil der landwirtschaftlichen Streumaschine und signalleitend mit den mehreren Sensoren verbunden. Die landwirtschaftliche Streumaschine ist vorzugsweise ein Zweischeiben-Düngerstreuer mit zwei nebeneinander angeordneten und rotierend antreibbaren Streuscheiben.

In einer bevorzugten Ausführungsform des erfindungsgemäßen Verfahrens wird, insbesondere während des Kalibriervorgangs, ein Soll-Flugverhalten des Streuguts erfasst. Das Ermitteln des Sollwertebereichs für jeden der mehreren Sensoren erfolgt vorzugsweise unter Berücksichtigung des erfassten Soll-Flugverhaltens. Das Erfassen des Soll-Flugverhaltens erfolgt vorzugsweise durch die Auswerteeinrichtung und/oder durch eine Berechnung des Soll-Flugverhaltens auf Grundlage eingestellter Streuparameter der landwirtschaftlichen Streumaschine und/oder Eigenschaften des verwendeten Streuguts bzw. der verwendeten Streugutsorte. Beim Überwachen der aufgezeichneten Messwerte wird in diesem Fall folglich geprüft, ob das durch die Sensoren erfasste tatsächliche Flugverhalten des abgeworfenen Streuguts zumindest im Wesentlichen dem erfassten Soll-Flugverhalten des Streuguts entspricht.

In einer anderen Ausführungsform des erfindungsgemäßen Verfahrens umfasst das Erfassen des Soll-Flugverhaltens des Streuguts das Erfassen eines Soll-Abwurfwinkels des Streuguts. Vorzugsweise erfolgt das Ermitteln des Sollwertebereichs für jeden der mehreren Sensoren unter Berücksichtigung des erfassten Soll-Abwurfwinkels des Streuguts. Das Erfassen des Soll-Abwurfwinkels des Streuguts erfolgt vorzugsweise durch die Auswerteeinrichtung und/oder durch eine Berechnung des Soll-Abwurfwinkels des Streuguts auf Grundlage des eingestellten Aufgabepunktes des Streuguts auf die Streuscheiben der landwirtschaftlichen Streumaschine. Alternativ oder zusätzlich erfolgt das Erfassen des Soll-Abwurfwinkels des Streuguts durch eine Berechnung des Soll-Abwurfwinkels auf Grundlage der eingestellten Scheibendrehzahl und des verwendeten Scheibentyps der landwirtschaftlichen Streumaschine. Über den Scheibentyp kann somit die Scheinkonfiguration und/oder die Scheibengeometrie berücksichtigt werden. Die Scheibenkonfiguration kann beispielsweise die Einstellungen der Wurfschaufeln der Streuscheibe betreffen. Die Geometrie der Streuscheibe kann beispielsweise den Scheibenradius oder die Schaufellänge der Streuscheibe betreffen. Unter Berücksichtigung der Scheibendrehzahl kann somit die Verweildauer des Streuguts auf der Streuscheibe und somit ein Soll-Abwurfwinkel ermittelt werden.

Alternativ oder zusätzlich kann der Soll-Abwurfwinkel durch einen Benutzer vorgegeben sein.

In einer Weiterbildung des erfindungsgemäßen Verfahrens umfasst das Erfassen des Soll-Flugverhaltens des Streuguts das Erfassen einer aktuellen Windrichtung und/oder Windstärke. Alternativ oder zusätzlich umfasst das Erfassen des Soll-Flugverhaltens des Streuguts das Erfassen einer Neigung der von der landwirtschaftlichen Streumaschine aktuell befahrenen landwirtschaftlichen Nutzfläche und/oder einer aktuellen Neigung der landwirtschaftlichen Streumaschine. Das Erfassen der aktuellen Windrichtung und/oder Windstärke und/oder das Erfassen der Neigung der von der landwirtschaftlichen Streumaschine aktuell befahrenen landwirtschaftlichen Nutzfläche und/oder der aktuellen Neigung der landwirtschaftlichen Streumaschine erfolgt vorzugsweise über Sensoren der landwirtschaftlichen Streumaschine. Vorzugsweise erfolgt das Ermitteln des Sollwertebereichs für jeden der mehreren Sensoren unter Berücksichtigung der erfassten aktuellen Windrichtung und/oder Windstärke. Alternativ oder zusätzlich erfolgt das Ermitteln des Sollwertebereichs für jeden der mehreren Sensoren unter Berücksichtigung der erfassten Neigung der von der landwirtschaftlichen Streumaschine befahrenen landwirtschaftlichen Nutzfläche und/oder der aktuellen Neigung der landwirtschaftlichen Streumaschine. Die Windrichtung, die Windstärke und die Maschinenneigung haben einen Einfluss auf das Flugverhalten des Streuguts. Damit das Soll-Flugverhalten möglichst präzise ermittelt werden kann, sind diese das Flugverhalten des Streuguts beeinflussenden Parameter zu berücksichtigen.

In einer anderen Ausführungsform des erfindungsgemäßen Verfahrens wird eine eingestellte und/oder tatsächliche Ausbringmenge an Streugut, insbesondere während des Kalibriervorgangs, erfasst. Das Erfassen der eingestellten und/oder tatsächlichen Ausbringmenge an Streugut erfolgt vorzugsweise durch die Auswerteeinrichtung. Das Erfassen der eingestellten Ausbringmenge an Streugut kann durch das Auslesen der Einstellung einer Streugut-Dosiereinrichtung der landwirtschaftlichen Streumaschine erfolgen. Das Erfassen der tatsächlichen Ausbringmenge an Streugut kann durch eine sensorische Erfassung eines maschineninternen Streugutstroms erfolgen. Da die Ausbringmenge einen erheblichen Einfluss auf die Signalamplitude der das Flugverhalten des Streuguts erfassenden Sensoren hat, erfolgt das Ermitteln des Sollwertebereichs für jeden der mehreren Sensoren unter Berücksichtigung der erfassten eingestellten und/oder tatsächlichen Ausbringmenge an Streugut. Somit kann die Ausbringmenge an Streugut während des Streuvorgangs in beabsichtigter Weise angepasst werden, ohne dass es zu einer Fehldetektion einer Sensorverschmutzung kommt.

In einer anderen bevorzugten Ausführungsform des erfindungsgemäßen Verfahrens umfasst das Ermitteln des Sollwertebereichs für jeden der mehreren Sensoren das Ermitteln einer Sollwertfunktion auf Grundlage der während des Kalibriervorgangs aufgezeichneten Messwerte der mehreren Sensoren. Vorzugsweise umfasst das Ermitteln des Sollwertebereichs für jeden der mehreren Sensoren das Bestimmen des Sollwertebereichs für jeden der mehreren Sensoren auf Grundlage des durch die Sollwertfunktion definierten Sollwerts für jeden der mehreren Sensoren und einem Toleranzbereich für eine tolerierbare Abweichung von dem jeweiligen Sollwert. Aufgrund unterschiedlicher Einflüsse auf die Sensoren der landwirtschaftlichen Streumaschine kann es zu geringen Messwertschwankungen kommen, welche nicht auf eine Sensorverschmutzung zurückzuführen sind. Ferner können Unregelmäßigkeiten im Streugut dazu führen, dass die Sensorwerte der das Flugverhalten des Streuguts erfassenden Sensoren gewissen Messwertschwankungen unterliegen. Zur Berücksichtigung entsprechender Messwertschwankungen wird ein Toleranzbereich für eine tolerierbare Abweichung von dem jeweiligen durch die Sollwertefunktion definierten Sollwert berücksichtigt. Somit können geringe Messwertschwankungen auftreten, ohne dass es zu einer Fehldetektion einer Sensorverschmutzung kommt. Die Sollwertfunktion kann einen Sollwert für jeden der mehreren Sensoren definieren. Das Streugut wird durch die Streuscheiben über einen Streuwinkelbereich abgeschleudert, wobei die Sollwertfunktion einen Amplitudenverlauf über den Streuwinkelbereich definieren kann. Über die Ausrichtung der Sensoren auf einen konkreten Streuwinkelteilbereich kann jedem Sensor somit ein Sollwert zugeordnet werden, sodass über den Amplitudenverlauf ein Sollwert für jeden der mehreren Sensoren definiert wird. Der Toleranzbereich kann dabei ein vordefinierter Wertebereich oder ein von der aktuellen Ausbringsituation abhängiger Wertebereich sein.

In einer anderen bevorzugten Ausführungsform des erfindungsgemäßen Verfahrens wird ein von dem während des Kalibriervorgangs ermittelten Sollwertebereichs abweichender angepasster Sollwertebereich für jeden der mehreren Sensoren auf Grundlage der während des Kalibriervorgangs ermittelten Sollwertebereiche und unter Berücksichtigung einer das Flugverhalten des abgeworfenen Streuguts beeinflussenden Veränderung der Streueinstellungen der landwirtschaftlichen Streumaschine berechnet. Bei einer Veränderung der Streueinstellungen der landwirtschaftlichen Streumaschine ist somit kein erneuter Kalibriervorgang auszuführen. Der angepasste Sollwertebereich für jeden der mehreren Sensoren wird auf Grundlage des Einflusses der Veränderungen der Streueinstellungen auf das Flugverhalten des abgeworfenen Streuguts berechnet. Die Veränderung der Streueinstellungen kann die Anpassung des Aufgabepunkts des Streuguts auf die Streuscheiben der landwirtschaftlichen Streumaschine betreffen, wodurch der Abwurfwinkel verändert wird. Durch eine Veränderung des Aufgabepunkts des Streuguts während des Streuvorgangs kommt es also zu einer Anpassung der Sollwertebereiche für die mehreren Sensoren. Die Veränderung der Streueinstellungen kann auch die Anpassung der Drehzahl der Streuscheiben der landwirtschaftlichen Streumaschine betreffen. Wenn angepasste Sollwertebereiche für die Sensoren berechnet wurden, erfolgt das Überwachen der durch die mehreren Sensoren aufgezeichneten Messwerte folglich hinsichtlich des Verlassens des für den jeweiligen Sensor ermittelten angepassten Sollwertebereichs, um eine entsprechende Sensorverschmutzung zu identifizieren. Das Berechnen des angepassten Sollwertebereichs für jeden Sensor erfolgt vorzugsweise durch die Auswerteeinrichtung.

Ferner ist ein erfindungsgemäßes Verfahren vorteilhaft, bei welchem das Überwachen der durch die mehreren Sensoren aufgezeichneten Messwerte auch hinsichtlich der Dauer des Verlassens des für den jeweiligen Sensor ermittelten Sollwertebereichs erfolgt. Ein kurzzeitiges Verlassen des Sollwertebereichs deutet auf eine lediglich temporäre Verschmutzung des Sensors oder eine andere temporäre Beeinträchtigung des Sensors hin, sodass weitere Maßnahmen zur Behebung und/oder zum Ausgleich einer Verschmutzung nicht zwingend erforderlich sind. Beispielsweise können kurzzeitig an den Sensoren anhaftende Regentropfen oder Schmutzpartikel sich von selbst wieder von dem Sensor lösen, sodass eine Sensorreinigung nicht erforderlich ist.

Das erfindungsgemäße Verfahren wird ferner dadurch vorteilhaft weitergebildet, dass ein Verschmutzungshinweis ausgegeben wird, wenn ein überwachter Messwert eines Sensors den Sollwertebereich verlässt. Ferner kann eine Aufforderung zur Durchführung einer Sensorreinigung ausgegeben werden, wenn ein überwachter Messwert eines Sensors den Sollwertebereich verlässt. Alternativ oder zusätzlich kann eine selbsttätige Aktivierung einer Sensorreinigungseinrichtung der landwirtschaftlichen Streumaschine durch eine Steuerungseinrichtung der landwirtschaftlichen Streumaschine erfolgen, wenn ein überwachter Messwert eines Sensors den Sollwertebereich verlässt. Das Ausgeben des Verschmutzungshinweises oder der Aufforderung zur Durchführung einer Sensorreinigung erfolgt vorzugsweise optisch und/oder akustisch, beispielsweise durch einen Informations- und/oder Bedienterminal. Bei der Ausgabe kann der verschmutzte Sensor bezeichnet und/oder in einer grafischen Darstellung hervorgehoben werden.

In einer anderen Ausführungsform des erfindungsgemäßen Verfahrens erfolgt ein selbsttätiges Deaktivieren eines Sensors, dessen überwachter Messwert den Sollwertebereich verlässt. Da die Messwerte dieses Sensors aufgrund einer Verschmutzung fehlerhaft sind, kann durch ein Deaktivieren des Sensors eine Beeinträchtigung einer auf den Messwerten der Sensoren basierenden Steuerung und/oder Regelung vermieden werden, sofern die Sensordeaktivierung im Rahmen der Steuerung und/oder Regelung berücksichtigt wird.

Das Verfahren umfasst vorzugsweise das selbsttätige Anpassen einer auf den Messwerten der Sensoren basierenden Steuerung und/oder Regelung des Aufgabepunkts des Streuguts auf eine Streuscheibe der landwirtschaftlichen Streumaschine zum Ausgleich einer Sensorverschmutzung, wenn ein überwachter Messwert eines Sensors den Sollwertebereich verlässt. Das Anpassen der Steuerung und/oder Regelung des Aufgabepunkts kann dazu führen, dass die Messwerte eines Sensors bei der Steuerung und/oder Regelung des Aufgabepunkts unberücksichtigt bleiben oder vor deren Verwendung korrigiert werden. Wenn die Messwerte eines Sensors unberücksichtigt bleiben, kann eine Messwertinterpolation auf Grundlage der Messwerte anderer Sensoren erfolgen, wobei der durch die Interpolation fingierte Messwert dann der Steuerung und/oder Regelung des Aufgabepunkts als Ersatzwert bereitgestellt werden kann. Insbesondere umfasst das Verfahren die Ausgabe eines Hinweises, dass ein verschmutzter Sensor deaktiviert wurde oder die Sensorwerte eines verschmutzten Sensors korrigiert werden. Alternativ oder zusätzlich umfasst das Verfahren das selbsttätige Deaktivieren einer auf den Messwerten der Sensoren basierenden Steuerung und/oder Regelung des Aufgabepunkts des Streuguts auf eine Streuscheibe der landwirtschaftlichen Streumaschine, wenn ein überwachter Messwert eines Sensors den Sollwertebereich verlässt. Ein Deaktivieren der Steuerung und/oder Regelung des Aufgabepunkts kann sinnvoll sein, wenn die Messwerte der nicht-verschmutzten Sensoren nicht mehr ausreichend sind, um eine Steuerung und/oder Regelung des Aufgabepunkts mit hoher Güte ausführen zu können.

In einer anderen bevorzugten Ausführungsform des erfindungsgemäßen Verfahrens wird eine eine Sensorverschmutzung ausgleichende Messwertkorrektur ermittelt. Vorzugsweise werden die Sensorwerte eines verschmutzten Sensors mittels der ermittelten Messwertkorrektur korrigiert. Aufgrund der Messwertkorrektur ist nicht zwangsläufig eine Sensorreinigung durchzuführen, wenn ein oder mehrere Sensoren verschmutzt sind. Die Sensorreinigung kann über die Messwertkorrektur fingiert werden. Die Messwertkorrektur kann eine Überlagerung des Sensorsignals des verschmutzten Sensors mit einem Korrektursignal oder die Berücksichtigung eines Korrekturfaktors umfassen.

Ferner ist ein erfindungsgemäßes Verfahren bevorzugt, bei welchem die vor und nach einer Reinigung zumindest eines Sensors durch den zumindest einen Sensor aufgezeichneten Messwerte zum Identifizieren eines Reinigungserfolgs oder eines Sensordefekt durch die Auswerteeinrichtung verglichen werden. Wenn eine Reinigung eines Sensors keinen Einfluss auf dessen Messwerte hat, kann davon ausgegangen werden, dass der Sensor nicht verschmutzt, sondern defekt ist. Wenn eine Sensorreinigung einen Einfluss auf die Messwerte eines Sensors hat, kann davon ausgegangen werden, dass kein Sensordefekt vorliegt und durch die Reinigung die Verschmutzung des Sensors behoben wurde. Das Verfahren kann das Ausgeben eines Hinweises auf einen Reinigungserfolg umfassen, wenn die Sensorreinigung einen wesentlichen Einfluss auf die miteinander verglichenen Messwerte des zumindest einen Sensors hat. Das Verfahren kann ferner das Ausgeben eines Hinweises auf einen Sensordefekt umfassen, wenn die Sensorreinigung keinen wesentlichen Einfluss auf die miteinander verglichenen Messwerte des zumindest einen Sensors hat.

Die der Erfindung zugrundeliegende Aufgabe wird ferner durch eine landwirtschaftliche Streumaschine der eingangs genannten Art gelöst, wobei die erfindungsgemäße landwirtschaftliche Streumaschine eine Auswerteeinrichtung umfasst, welche dazu eingerichtet ist, einen Sollwertebereich für jeden der mehreren Sensoren während eines Kalibriervorgangs beim Ausbringen von Streugut auf eine landwirtschaftliche Nutzfläche zu ermitteln und die durch die mehreren Sensoren aufgezeichneten Messwerte hinsichtlich des Verlassens des für den jeweiligen Sensor ermittelten Sollwertebereichs zum Identifizieren einer Sensorverschmutzung zu überwachen. Hinsichtlich der Vorteile und Modifikationen der erfindungsgemäßen landwirtschaftlichen Streumaschine wird zunächst auf die Vorteile und Modifikationen des erfindungsgemäßen Verfahrens verwiesen.

In der erfindungsgemäßen Streumaschine sind die Sensoren als Radarsensoren ausgebildet und auf einen von der Streumaschine durch den Streugutabwurf erzeugten Streufächer ausgerichtet. Vorzugsweise ist eine erste Gruppe von Sensoren einer ersten Streuscheibe zugeordnet, wobei eine zweite Gruppe von Sensoren einer zweiten Streuscheibe zugeordnet ist.

In einer Weiterbildung der erfindungsgemäßen landwirtschaftlichen Streumaschine weist diese eine Ausgabeeinrichtung auf, welche dazu eingerichtet ist, einen Verschmutzungshinweis und/oder eine Aufforderung zur Durchführung einer Sensorreinigung auszugeben, wenn ein überwachter Messwert eines Sensors den Sollwertebereich verlässt. Die Ausgabeeinrichtung kann eine Anzeige- und/oder eine Tonwiedergabeeinrichtung umfassen und/oder als Informations- und/oder Bedienterminal ausgebildet sein. Die landwirtschaftliche Streumaschine kann eine die Messwerte der Sensoren nutzende Steuerung und/oder Regelungseinrichtung zur Steuerung und/oder Regelung des Aufgabepunkts des Streuguts auf eine Streuscheibe aufweisen, wobei die Steuerungs- und/oder Regelungseinrichtung dazu eingerichtet sein kann, sich selbsttätig anzupassen oder sich selbsttätig zu deaktivieren, wenn ein überwachter Messwert eines Sensors den Sollwertebereich verlässt. Die landwirtschaftliche Streumaschine kann eine Sensorreinigungseinrichtung aufweisen, wobei die Sensorreinigungseinrichtung dazu eingerichtet ist, einen Sensor zu reinigen, wenn ein überwachter Messwert des Sensors den Sollwertebereich verlässt. Die Auswerteeinrichtung kann dazu eingerichtet sein, eine die Sensorverschmutzung ausgleichende Messwertkorrektur zu ermitteln und die Sensorwerte des verschmutzten Sensors mittels der ermittelten Messwertkorrektur zu korrigieren.

In einer weiteren bevorzugten Ausführungsform der erfindungsgemäßen landwirtschaftlichen Streumaschine ist diese dazu eingerichtet, das Verfahren zum Ermitteln des Verschmutzungszustands zumindest eines Sensors nach einer der vorstehend beschriebenen Ausführungsformen auszuführen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Streumaschine in einer schematischen Darstellung;
- Fig. 2: während eines Kalibriervorgangs aufgezeichnete Messwerte,
- Fig. 3: während eines Streuvorgangs nach Ausführen des der Fig. 2 zugrundeliegenden Kalibriervorgangs aufgezeichnete Messwerte,
- Fig. 4: während des der Fig. 2 zugrundeliegenden Streuvorgangs nach einem Verändern des Aufgabepunkts des Streuguts aufgezeichnete Messwerte; und
- Fig. 5: während des der Fig. 2 zugrundeliegenden Streuvorgangs nach einem Verändern des Aufgabepunkts des Streuguts aufgezeichnete Messwerte.

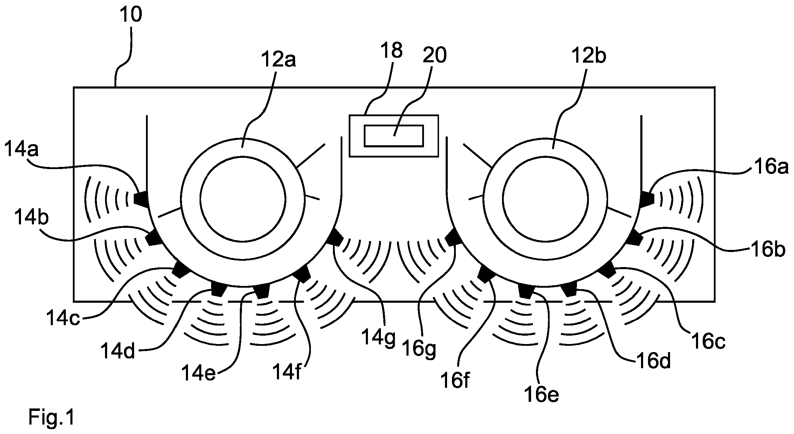

Die Fig. 1 zeigt eine als Zweischeiben-Düngersteuer ausgebildete landwirtschaftliche Streumaschine 10. Die landwirtschaftliche Streumaschine 10 umfasst zwei nebeneinander angeordnete und rotierend antreibbare Streuscheiben 12a, 12b. Über ein steuerbares Streuguteinleitsystem lässt sich die Menge und der Aufgabepunkt des auf die Streuscheiben 12a, 12b aufgegebenen Streuguts einstellen.

Die landwirtschaftliche Streumaschine 10 verfügt über eine Aufgabepunkt-Regelung, mittels welcher während des Streuvorgangs der Aufgabepunkt des Streuguts auf die Streuscheiben 12a, 12b geregelt wird. Über den Aufgabepunkt des Streuguts auf die Streuscheiben 12a, 12b kann der Abwurfwinkel des Streuguts von den Streuscheiben 12a, 12b eingestellt werden. Die Aufgabepunkt-Regelung sorgt dafür, dass das Streugut während des Streuvorgangs stets mit einem geeigneten Abwurfwinkel auf die landwirtschaftliche Nutzfläche abgeworfen wird. Auf diese Weise kann eine gewünschte, insbesondere gleichmäßige, Querverteilung des Streuguts auf der landwirtschaftlichen Nutzfläche erreicht werden.

Die Aufgabepunkt-Regelung verwendet Messwerte 22a-22g, welche von Sensoren 14a-14g, 16a-16g aufgezeichnet werden. Die Sensoren 14a-14g, 16a-16g sind als Radarsensoren ausgebildet. Die Sensoren 14a-14g sind derart angeordnet und ausgerichtet, dass diese den durch den Streugutabwurf der Streuscheibe 12a erzeugten Streufächer erfassen. Die Sensoren 16a-16g sind derart angeordnet und ausgerichtet, dass diese den durch den Streugutabwurf der Streuscheibe 12b erzeugten Streufächer erfassen.

Über die Streufächererfassung kann der Abwurfwinkel des Streuguts ermittelt werden. Die Aufgabepunkt-Regelung wird über die Steuerungs- und Regelungseinrichtung 18 der landwirtschaftlichen Streumaschine 10 umgesetzt, welche mit den Sensoren 14a-14g, 16a-16g signalleitend verbunden ist.

Die Steuerungs- und Regelungseinrichtung 18 weist ferner eine Auswerteeinrichtung 20 auf, welche dazu eingerichtet ist, einen Sollwertebereich 24a-24g für jeden der Sensoren 14a-14g, 16a-16g während eines Kalibriervorgangs beim Ausbringen von Streugut auf eine landwirtschaftliche Nutzfläche zu ermitteln. Hierzu wird der Soll-Abwurfwinkel des Streuguts während des Kalibriervorgangs erfasst, sodass die Sollwertebereiche 24a-24g für die Sensoren 14a-14g, 16a-16g unter Berücksichtigung des erfassten Soll-Abwurfwinkels des Streuguts ermittelt werden.

Ferner umfasst das Erfassen des Soll-Flugverhaltens des Streuguts das Erfassen der aktuellen Windrichtung sowie der aktuellen Windstärke und das Erfassen der aktuellen Neigung der landwirtschaftlichen Streumaschine 10. Das Ermitteln des Sollwertebereichs für jeden der Sensoren 14a-14g, 16a-16g erfolgt unter Berücksichtigung der erfassten aktuellen Windrichtung, der erfassten aktuellen Windstärke und der aktuellen Neigung der landwirtschaftlichen Streumaschine 10. Zum Erfassen der aktuellen Windrichtung und -stärke wird ein Windsensor der landwirtschaftlichen Streumaschine 10 eingesetzt. Die aktuelle Neigung der landwirtschaftlichen Streumaschine 10 kann über Neigungssensoren oder Beschleunigungssensoren der landwirtschaftlichen Streumaschine 10 erfasst werden.

Die Auswerteeinrichtung 20 überwacht die durch die Sensoren 14-14g, 16a-16g aufgezeichneten Messwerte 22a-22g hinsichtlich des Verlassens des für den jeweiligen Sensor 14a-14g, 16a-16g ermittelten Sollwertebereichs 24a-24g. Das Überwachen der Messwerte 22a-22g erfolgt zum Identifizieren einer Sensorverschmutzung. Das Überwachen der durch die Sensoren 14a-14g, 16a-16g aufgezeichneten Messwerte 22a-22g erfolgt auch hinsichtlich der Dauer des Verlassens des für den jeweiligen Sensor 14a-14g, 16a-16g ermittelten Sollwertebereichs 24a-24g, da ein kurzzeitiges Verlassen des Sollwertebereichs 24a-24g auf eine lediglich temporäre Verschmutzung eines Sensors 14a-14g, 16a-16g hindeutet, sodass weitere Maßnahmen zur Behebung und/oder zum Ausgleich der Verschmutzung nicht zwingend erforderlich sind. Wenn ein überwachter Messwert 22a-22g eines Sensors 14a-14g, 16a-16g den Sollwertebereich 24a-24g verlässt, wird mittels eines Informations- und Bedienterminals ein Verschmutzungshinweis und eine Aufforderung zur Durchführung einer Sensorreinigung optisch ausgegeben. Alternativ zur Ausgabe der Aufforderung zur Durchführung einer Sensorreinigung kann auch eine Sensorreinigungseinrichtung der landwirtschaftlichen Streumaschine 10 selbsttätig durch eine Steuerungseinrichtung der landwirtschaftlichen Streumaschine 10 aktiviert werden, wenn ein überwachter Messwert 22a-22g eines Sensors 14a-14g, 16a-16g den Sollwertebereich 24a-24g verlässt.

Damit die Aufgabepunkt-Regelung nicht durch die Sensorverschmutzung beeinträchtigt wird, wird die Regelung des Aufgabepunkts zum Ausgleich der Sensorverschmutzung angepasst. Hierbei werden die Messwerte 22a-22g des verschmutzten Sensors 14a-14g, 16a-16g bei der Regelung des Aufgabepunkts entweder nicht berücksichtigt oder vor deren Verwendung korrigiert. Wenn die Messwerte 22a-22g des verschmutzten Sensors 14a-14g, 16a-16g nicht berücksichtigt werden, erfolgt eine Interpolation eines entsprechenden Messwerts auf Grundlage der Messwerte 22a-22g der nicht-verschmutzten Sensoren 14a-14g, 16a-16g. Der interpolierte Messwert wird dann der Aufgabepunkt-Regelung als Ersatzwert für den verschmutzten Sensor 14a-14g, 16a-16g zur Verfügung gestellt. Alternativ zur Interpolation kann der Messwert 22a-22g des verschmutzten Sensors 14a-14g, 16a-16g auch korrigiert werden. Hierzu wird eine Messwertkorrektur durchgeführt, um auf Grundlage der Messwertkorrektur die Sensorverschmutzung auszugleichen.

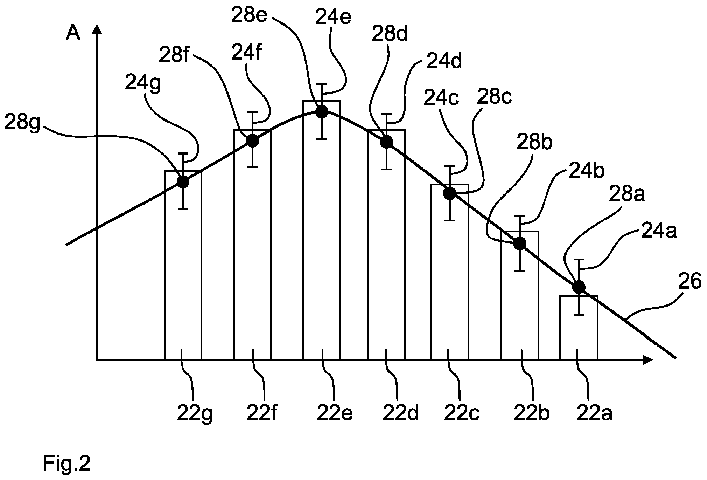

Die Fig. 2 zeigt während eines Kalibriervorgangs aufgezeichnete Messwerte 22a-22g der Sensoren 14a-14g. Zum Ermitteln der Sollwertebereiche 24a-24g für die Sensoren 14a-14g wird zunächst eine Sollwertfunktion 26 auf Grundlage der während des Kalibriervorgangs aufgezeichneten Messwerte 22a-22g ermittelt. Die Sollwertfunktion 26 entspricht einem Sollverlauf einer Amplitude A und definiert für jeden Sensor 14a-14g einen Sollwert 28a-28g. Die Sollwertebereiche 24a-24g werden dann auf Grundlage des Sollwerts 28a-28g und einem Toleranzbereich für eine tolerierbare Abweichung von dem jeweiligen Sollwert 28a-28g bestimmt.

Sofern die Messwerte 22a-22g der Sensoren 14a-14g innerhalb der Sollwertebereiche 24a-24g liegen, ist davon auszugehen, dass keine Sensorverschmutzung vorliegt.

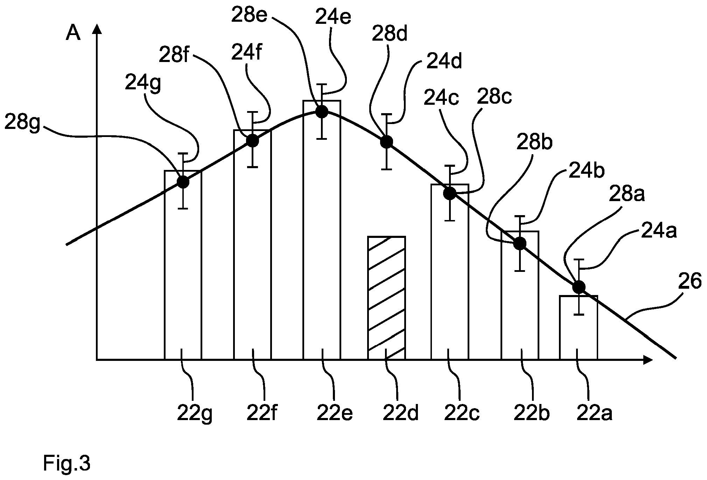

Die Fig. 3 zeigt, dass der Messwert 22d außerhalb des Sollwertebereichs 24d liegt. Aufgrund der Überwachung durch die Auswerteeinrichtung 20 wird festgestellt, dass der Messwert 22d den Sollwertebereich 24d verlassen hat. Vorliegend ist also davon auszugehen, dass der Sensor 14d verschmutzt ist, sodass eine Sensorreinigung erforderlich ist. Über eine Ausgabeeinrichtung kann der Benutzer der landwirtschaftlichen Streumaschine 10 zur Durchführung einer entsprechenden Sensorreinigung aufgefordert werden. Alternativ kann eine Sensorreinigungseinrichtung zum Reinigen des Sensors 14d aktiviert werden. Alternativ zur Durchführung einer Sensorreinigung kann der Messwert 22d des Sensors 14d auch durch eine Messwertkorrektur korrigiert werden, sodass eine Unterbrechung des Streuvorgangs zur Vornahme der Sensorreinigung nicht zwingend erforderlich ist.

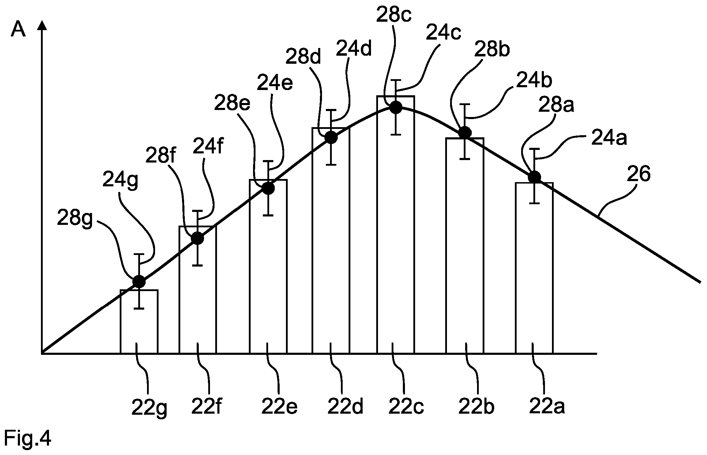

Die Fig. 4 zeigt ebenfalls Sollwertebereiche 24a-24g für die Sensoren 14a-14g, welche auf einer Sollwertfunktion 26 basieren. Die Sollwertfunktion 26 ist jedoch nicht im Rahmen eines Kalibriervorgangs neu ermittelt worden, sondern stellt eine Anpassung der in den Fig. 2 und 3 dargestellten Sollwertfunktion 26 dar. Vor dem in der Fig. 4 dargestellten Zustand sind Streueinstellungen der landwirtschaftlichen Streumaschine 10 verändert worden, wobei die Veränderung der Streueinstellungen das Flugverhalten des abgeworfenen Streuguts beeinflusst haben. Konkret wurde der Aufgabepunkt des Streuguts auf die Streuscheiben 12a-12b der landwirtschaftlichen Streumaschine 10 verändert. Um nicht erneut einen Kalibriervorgang ausführen zu müssen, sind die dargestellten Sollwertebereiche 24a-24g auf Grundlage der während des ursprünglichen Kalibriervorgangs ermittelten Sollwertebereiche 24a-24g (vgl. Fig. 2 und Fig. 3) und unter Berücksichtigung der das Flugverhalten des abgeworfenen Streuguts beeinflussenden Veränderung der Streueinstellung der landwirtschaftlichen Streumaschine 10 berechnet worden.

Aufgrund eines veränderten Aufgabepunkts des Streuguts auf die Streuscheiben 12a, 12b der landwirtschaftlichen Streumaschine 10 ändert sich der Abwurfwinkel des Streuguts. Dies führt dazu, dass die ursprüngliche Sollwertfunktion 26 sowie die auf Grundlage der ursprünglichen Sollwertfunktion 26 ermittelten ursprünglichen Sollwertebereiche 24a-24g verschoben werden.

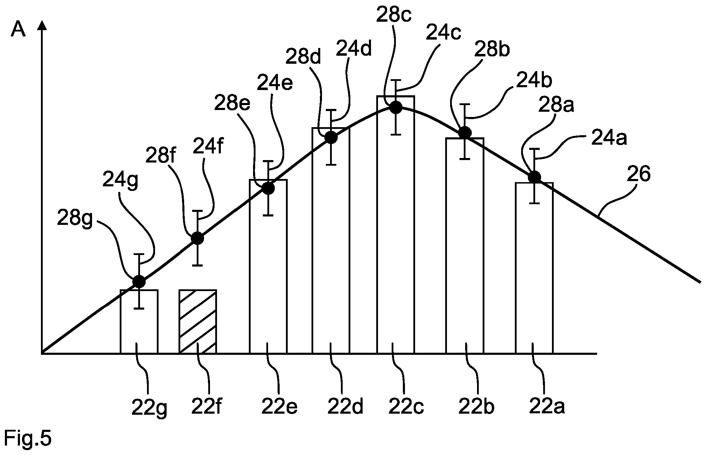

Die Fig. 5 zeigt, dass der Messwert 22f des Sensors 14f außerhalb des angepassten Sollwertebereichs 24f liegt. Somit ist davon auszugehen, dass der Sensor 14f verschmutzt ist. Entsprechend können wieder geeignete Maßnahmen veranlasst werden, um den verschmutzen Sensor 14f zu reinigen oder die Messwerte 22f des Sensors 14f zum Ausgleich der Sensorverschmutzung zu korrigieren.

### Bezugszeichenliste

- 10: Streumaschine
- 12a, 12b: Streuscheiben
- 14a-14g: Sensoren
- 16a-16g: Sensoren
- 18: Steuerungs- und Regelungseinrichtung
- 20: Auswerteeinrichtung
- 22a-22g: Messwerte
- 24a-24g: Sollwertebereiche
- 26: Sollwertfunktion
- 28a-28g: Sollwerte

- A: Amplitude

## Patentansprüche

1. Verfahren zum Ermitteln des Verschmutzungszustands zumindest eines Sensors (14a-14g, 16a-16g) einer landwirtschaftlichen Streumaschine (10), mit dem Schritt:
- Aufzeichnen von Messwerten (22a-22g) durch mehrere Sensoren (14a-14g, 16a-16g) einer landwirtschaftlichen Streumaschine (10), wobei die Messwerte (22a-22g) das Flugverhalten des abgeworfenen Streuguts betreffen;
**gekennzeichnet durch** die Schritte:
- Ermitteln eines Sollwertebereichs (24a-24g) für jeden der mehreren Sensoren (14a-14g, 16a-16g) während eines Kalibriervorgangs durch eine Auswerteeinrichtung (20) beim Ausbringen von Streugut auf eine landwirtschaftliche Nutzfläche; und
- Überwachen der durch die mehreren Sensoren (14a-14g, 16a-16g) aufgezeichneten Messwerte (22a-22g) hinsichtlich des Verlassens des für den jeweiligen Sensor (14a-14g, 16a-16g) ermittelten Sollwertebereichs (24a-24g) zum Identifizieren einer Sensorverschmutzung durch die Auswerteeinrichtung (20);
wobei die Sensoren (14a-14g, 16a-16g) als Radarsensoren ausgebildet sind und auf einen von der Streumaschine (10) durch den Streugutabwurf erzeugten Streufächer ausgerichtet sind.

2. Verfahren nach Anspruch 1,
**gekennzeichnet durch** zumindest einen der folgenden Schritte:
- Erfassen eines Soll-Flugverhaltens des Streuguts, insbesondere während des Kalibriervorgangs;
wobei das Ermitteln des Sollwertebereichs (24a-24g) für jeden der mehreren Sensoren (14a-14g, 16a-16g) unter Berücksichtigung des erfassten Soll-Flugverhaltens erfolgt.

3. Verfahren nach Anspruch 2,
**dadurch gekennzeichnet, dass** das Erfassen des Soll-Flugverhaltens des Streuguts den folgenden Schritt umfasst:
- Erfassen eines Soll-Abwurfwinkels des Streuguts;
wobei das Ermitteln des Sollwertebereichs (24a-24g) für jeden der mehreren Sensoren (14a-14g, 16a-16g) unter Berücksichtigung des erfassten Soll-Abwurfwinkels des Streuguts erfolgt.

4. Verfahren nach Anspruch 2 oder 3,
**dadurch gekennzeichnet, dass** das Erfassen des Soll-Flugverhaltens des Streuguts zumindest einen der folgenden Schritte umfasst:
- Erfassen einer aktuellen Windrichtung und/oder Windstärke;
- Erfassen einer Neigung der von der landwirtschaftlichen Streumaschine (10) aktuell befahrenen landwirtschaftlichen Nutzfläche und/oder einer aktuellen Neigung der landwirtschaftlichen Streumaschine (10);
wobei das Ermitteln des Sollwertebereichs (24a-24g) für jeden der mehreren Sensoren (14a-14g, 16a-16g) unter Berücksichtigung der erfassten aktuellen Windrichtung und/oder Windstärke und/oder der erfassten Neigung der von der landwirtschaftlichen Streumaschine (10) aktuell befahrenen landwirtschaftlichen Nutzfläche und/oder der aktuellen Neigung der landwirtschaftlichen Streumaschine (10) erfolgt.

5. Verfahren nach einem der vorstehenden Ansprüche,
**gekennzeichnet durch** den Schritt:
- Erfassen einer eingestellten und/oder tatsächlichen Ausbringmenge an Streugut, insbesondere während des Kalibriervorgangs;
wobei das Ermitteln des Sollwertebereichs (24a-24g) für jeden der mehreren Sensoren (14a-14g, 16a-16g) unter Berücksichtigung der erfassten eingestellten und/oder tatsächlichen Ausbringmenge an Streugut erfolgt.

6. Verfahren nach einem der vorstehenden Ansprüche,
**dadurch gekennzeichnet, dass** das Ermitteln des Sollwertebereichs (24a-24g) für jeden der mehreren Sensoren (14a-14g, 16a-16g) zumindest einen der folgenden Schritte umfasst:
- Ermitteln einer Sollwertfunktion (26) auf Grundlage der während des Kalibriervorgangs aufgezeichneten Messwerte (22a-22g) der mehreren Sensoren (14a-14g, 16a-16g);
- Bestimmen des Sollwertebereichs (24a-24g) für jeden der mehreren Sensoren (14a-14g, 16a-16g) auf Grundlage des durch die Sollwertfunktion (26) definierten Sollwerts (28a-28g) für jeden der mehreren Sensoren (14a-14g, 16a-16g) und einem Toleranzbereich für eine tolerierbare Abweichung von dem jeweiligen Sollwert (28a-28g).

7. Verfahren nach einem der vorstehenden Ansprüche,
**gekennzeichnet durch** den Schritt:
- Berechnen eines von dem während des Kalibriervorgangs ermittelten Sollwertebereichs (24a-24g) abweichenden angepassten Sollwertebereichs (24a-24g) für jeden der mehreren Sensoren (14a-14g, 16a-16g) auf Grundlage der während des Kalibriervorgangs ermittelten Sollwertebereiche (24a-24g) und unter Berücksichtigung einer das Flugverhalten des abgeworfenen Streuguts beeinflussenden Veränderung der Streueinstellungen der landwirtschaftlichen Streumaschine (10).

8. Verfahren nach einem der vorstehenden Ansprüche,
**dadurch gekennzeichnet, dass** das Überwachen der durch die mehreren Sensoren (14a-14g, 16a-16g) aufgezeichneten Messwerte (22a-22g) auch hinsichtlich der Dauer des Verlassens des für den jeweiligen Sensor (14a-14g, 16a-16g) ermittelten Sollwertebereichs (24a-24g) erfolgt.

9. Verfahren nach einem der vorstehenden Ansprüche,
**gekennzeichnet durch** zumindest einen der folgenden Schritte:
- Ausgeben eines Verschmutzungshinweises, wenn ein überwachter Messwert (22a-22g) eines Sensors (14a-14g, 16a-16g) den Sollwertebereich (24a-24g) verlässt;
- Ausgeben einer Aufforderung zur Durchführung einer Sensorreinigung, wenn ein überwachter Messwert (22a-22g) eines Sensors (14a-14g, 16a-16g) den Sollwertebereich (24a-24g) verlässt;
- selbsttätiges Aktivieren einer Sensorreinigungseinrichtung der landwirtschaftlichen Streumaschine (10) durch eine Steuerungseinrichtung der landwirtschaftlichen Streumaschine (10), wenn ein überwachter Messwert (22a-22g) eines Sensors (14a-14g, 16a-16g) den Sollwertebereich (24a-24g) verlässt.

10. Verfahren nach einem der vorstehenden Ansprüche,
**gekennzeichnet durch** zumindest einen der folgenden Schritte:
- selbsttätiges Deaktivieren eines Sensors, dessen überwachter Messwert (22a-22g) den Sollwertebereich (24a-24g) verlässt;
- selbsttätiges Anpassen einer auf den Messwerten (22a-22g) der Sensoren (14a-14g, 16a-16g) basierenden Steuerung und/oder Regelung des Aufgabepunkts des Streuguts auf eine Streuscheibe (12a, 12b) der landwirtschaftlichen Streumaschine (10) zum Ausgleich einer Sensorverschmutzung, wenn ein überwachter Messwert (22a-22g) eines Sensors (14a-14g, 16a-16g) den Sollwertebereich (24a-24g) verlässt;
- selbsttätiges Deaktivieren einer auf den Messwerten (22a-22g) der Sensoren (14a-14g, 16a-16g) basierenden Steuerung und/oder Regelung des Aufgabepunkts des Streuguts auf eine Streuscheibe (12a, 12b) der landwirtschaftlichen Streumaschine (10), wenn ein überwachter Messwert (22a-22g) eines Sensors (14a-14g, 16a-16g) den Sollwertebereich (24a-24g) verlässt.

11. Verfahren nach einem der vorstehenden Ansprüche,
**gekennzeichnet durch** zumindest einen der folgenden Schritte:
- Ermitteln einer eine Sensorverschmutzung ausgleichenden Messwertkorrektur;
- Korrigieren der Sensorwerte eines verschmutzten Sensors (14a-14g, 16a-16g) mittels der ermittelten Messwertkorrektur.

12. Verfahren nach einem der vorstehenden Ansprüche,
**gekennzeichnet durch** den Schritt:
- Vergleichen der vor und nach einer Reinigung zumindest eines Sensors (14a-14g, 16a-16g) durch den zumindest einen Sensor (14a-14g, 16a-16g) aufgezeichneten Messwerte (22a-22g) zum Identifizieren eines Reinigungserfolgs oder eines Sensordefekts durch die Auswerteeinrichtung (20).

13. Landwirtschaftliche Streumaschine (10), mit
- mehreren Sensoren (14a-14g, 16a-16g), welche dazu eingerichtet sind, Messwerte (22a-22g) aufzuzeichnen, welche das Flugverhalten des abgeworfenen Streuguts betreffen;
**gekennzeichnet durch** Sensoren (14a-14g, 16a-16g), welche als Radarsensoren ausgebildet und auf einen von der Streumaschine (10) durch den Streugutabwurf erzeugten Streufächer ausgerichtet sind und durch eine Auswerteeinrichtung (20), welche dazu eingerichtet ist, einen Sollwertebereich (24a-24g) für jeden der mehreren Sensoren (14a-14g, 16a-16g) während eines Kalibriervorgangs beim Ausbringen von Streugut auf eine landwirtschaftliche Nutzfläche zu ermitteln und die durch die mehreren Sensoren (14a-14g, 16a-16g) aufgezeichneten Messwerte (22a-22g) hinsichtlich des Verlassens des für den jeweiligen Sensor (14a-14g, 16a-16g) ermittelten Sollwertebereichs (24a-24g) zum Identifizieren einer Sensorverschmutzung zu überwachen.

14. Landwirtschaftliche Streumaschine (10) nach Anspruch 13,
**gekennzeichnet durch** eine Ausgabeeinrichtung, welche dazu eingerichtet ist, einen Verschmutzungshinweis und/oder eine Aufforderung zur Durchführung einer Sensorreinigung auszugeben, wenn ein überwachter Messwert (22a-22g) eines Sensors (14a-14g, 16a-16g) den Sollwertebereich (24a-24g) verlässt.

15. Landwirtschaftliche Streumaschine (10) nach einem der Ansprüche 13 bis 14,
**dadurch gekennzeichnet, dass** die landwirtschaftliche Streumaschine (10) dazu eingerichtet ist, das Verfahren zum Ermitteln des Verschmutzungszustands zumindest eines Sensors (14a-14g, 16a-16g) nach einem der Ansprüche 2 bis 12 auszuführen.

## Claims

1. Method for determining the contamination state of at least one sensor (14a-14g, 16a-16g) of an agricultural spreader (10), comprising the step of:
- recording measurement values (22a-22g) by means of a plurality of sensors (14a-14g, 16a-16g) of an agricultural spreader (10), the measurement values (22a-22g) relating to the flight behavior of the ejected spreading material;
**characterized by** the following steps:
- determining a target value range (24a-24g) for each of the plurality of sensors (14a-14g, 16a-16g) during a calibration process by means of an evaluation device (20) when applying spreading material onto an agricultural area; and
- monitoring the measurement values (22a-22g) recorded by means of the plurality of sensors (14a-14g, 16a-16g) with regard to departure from the target value range (24a-24g) determined for the relevant sensor (14a-14g, 16a-16g) in order to identify sensor contamination by means of the evaluation device (20);
the sensors (14a-14g, 16a-16g) being designed as radar sensors and being aligned with a spreading fan pattern produced by the spreader (10) by the ejection of the spreading material.

2. Method according to claim 1,
**characterized by** at least one of the following steps:
- detecting a target flight behavior of the spreading material, in particular during the calibration process;
the target value range (24a-24g) for each of the plurality of sensors (14a-14g, 16a-16g) being determined taking into account the detected target flight behavior.

3. Method according to claim 2,
**characterized in that** detecting the target flight behavior of the spreading material comprises the following step:
- detecting a target ejection angle of the spreading material;
the target value range (24a-24g) for each of the plurality of sensors (14a-14g,16a-16g) being determined taking into account the detected target ejection angle of the spreading material.

4. Method according to claim 2 or 3,
**characterized in that** detecting the target flight behavior of the spreading material comprises at least one of the following steps:
- detecting a current wind direction and/or wind strength;
- detecting an inclination of the agricultural area currently being traveled on by the agricultural spreader (10) and/or a current inclination of the agricultural spreader (10);
the target value range (24a-24g) for each of the plurality of sensors (14a-14g,16a-16g) being determined taking into account the detected current wind direction and/or wind strength and/or the detected inclination of the agricultural area currently being traveled on by the agricultural spreader (10) and/or the current inclination of the agricultural spreader (10).

5. Method according to any of the preceding claims,
**characterized by** the step of:
- detecting a set and/or actual application quantity of spreading material, in particular during the calibration process;
the target value range (24a-24g) for each of the plurality of sensors (14a-14g, 16a-16g) being determined taking into account the detected set and/or actual application quantity of spreading material.

6. Method according to any of the preceding claims,
**characterized in that** determining the target value range (24a-24g) for each of the plurality of sensors (14a-14g, 16a-16g) comprises at least one of the following steps:
- determining a target value function (26) based on the measurement values (22a-22g) of the plurality of sensors (14a-14g, 16a-16g) recorded during the calibration process;
- determining the target value range (24a-24g) for each of the plurality of sensors (14a-14g, 16a-16g) based on the target value (28a-28g) for each of the plurality of sensors (14a-14g, 16a-16g), which is defined by the target value function (26), and a tolerance range for a tolerable deviation from the relevant target value (28a-28g).

7. Method according to any of the preceding claims,
**characterized by** the step of:
- calculating an adapted target value range (24a-24g) for each of the plurality of sensors (14a-14g, 16a-16g), which deviates from the target value range (24a-24g) determined during the calibration process, based on the target value ranges (24a-24g) determined during the calibration process and taking into account a change in the spreading settings of the agricultural spreader (10) that influences the flight behavior of the ejected spreading material.

8. Method according to any of the preceding claims,
**characterized in that** the measurement values (22a-22g) recorded by the plurality of sensors (14a-14g, 16a-16g) are also monitored with regard to the duration of the departure from the target value range (24a-24g) determined for the relevant sensor (14a-14g, 16a-16g).

9. Method according to any of the preceding claims,
**characterized by** at least one of the following steps:
- outputting a contamination warning when a monitored measurement value (22a-22g) of a sensor (14a-14g, 16a-16g) departs from the target value range (24a-24g);
- outputting a request to carry out a sensor cleaning process when a monitored measurement value (22a-22g) of a sensor (14a-14g, 16a-16g) departs from the target value range (24a-24g);
- automatically activating a sensor cleaning device of the agricultural spreader (10) by means of a control device of the agricultural spreader (10) when a monitored measurement value (22a-22g) of a sensor (14a-14g, 16a-16g) departs from the target value range (24a-24g).

10. Method according to any of the preceding claims,
**characterized by** at least one of the following steps:
- automatically deactivating a sensor, of which the monitored measurement value (22a-22g) departs from the target value range (24a-24g);
- automatically adapting open-loop and/or closed-loop control of the feed point of the spreading material onto a spreader disc (12a, 12b) of the agricultural spreader (10), which control is based on the measurement values (22a-22g) of the sensors (14a-14g, 16a-16g), in order to compensate for sensor contamination when a monitored measurement value (22a-22g) of a sensor (14a-14g, 16a-16g) departs from the target value range (24a-24g);
- automatically deactivating open-loop and/or closed-loop control of the feed point of the spreading material onto a spreader disc (12a, 12b) of the agricultural spreader (10), which control is based on the measurement values (22a-22g) of the sensors (14a-14g, 16a-16g), when a monitored measurement value (22a-22g) of a sensor (14a-14g, 16a-16g) departs from the target value range (24a-24g).

11. Method according to any of the preceding claims,
**characterized by** at least one of the following steps:
- determining a measurement value correction compensating for sensor contam i nation;
- correcting the sensor values of a contaminated sensor (14a-14g, 16a-16g) by means of the determined measurement value correction.

12. Method according to any of the preceding claims,
**characterized by** the step of:
- comparing the measurement values (22a-22g) recorded before and after a cleaning process of at least one sensor (14a-14g, 16a-16g) by means of the at least one sensor (14a-14g, 16a-16g) in order to identify a cleaning success or a sensor defect by means of the evaluation device (20).

13. Agricultural spreader (10), comprising
- a plurality of sensors (14a-14g, 16a-16g), which are designed to record measurement values (22a-22g) relating to the flight behavior of the ejected spreading material;
**characterized by** sensors (14a-14g, 16a-16g), which are designed as radar sensors and are aligned with a spreading fan pattern produced by the spreader (10) by the ejection of the spreading material, and by an evaluation device (20) which is designed to determine a target value range (24a-24g) for each of the plurality of sensors (14a-14g, 16a-16g) during a calibration process when applying spreading material onto an agricultural area, and to monitor the measurement values (22a-22g) recorded by means of the plurality of sensors (14a-14g, 16a-16g) with regard to departure from the target value range (24a-24g) determined for the relevant sensor (14a-14g, 16a-16g) in order to identify sensor contamination.

14. Agricultural spreader (10) according to claim 13,
**characterized by** an output device which is designed to output a contamination warning and/or a request to carry out a sensor cleaning process if a monitored measurement value (22a-22g) of a sensor (14a-14g, 16a-16g) departs from the target value range (24a-24g).

15. Agricultural spreader (10) according to any of claims 13 to 14,
**characterized in that** the agricultural spreader (10) is designed to carry out the method for determining the contamination state of at least one sensor (14a-14g, 16a-16g) according to any of claims 2 to 12.

## Revendications

1. Procédé permettant de déterminer l'état d'encrassement d'au moins un capteur (14a-14 g, 16a-16g) d'une machine d'épandage (10) agricole, comportant les étapes :
- d'enregistrement de valeurs mesurées (22a-22g) par plusieurs capteurs (14a-14 g, 16a-16g) d'une machine d'épandage (10) agricole, les valeurs mesurées (22a-22g) concernant le comportement en vol du produit d'épandage éjecté ;
**caractérisé par** les étapes :
- de détermination d'une plage de valeurs de consigne (24a-24g) pour chacun des plusieurs capteurs (14a-14 g, 16a-16g) pendant un processus d'étalonnage par un dispositif d'évaluation (20) lors de la sortie de produit d'épandage sur une surface agricole utile ; et
- de surveillance des valeurs mesurées (22a-22g) enregistrées par les plusieurs capteurs (14a-14 g, 16a-16g) concernant la sortie de la plage de valeurs de consignes (24a-24g) déterminée pour le capteur (14a-14 g, 16a-16g) respectif pour l'identification d'un encrassement de capteur par le dispositif d'évaluation (20) ;
les capteurs (14a-14 g, 16a-16g) étant réalisés en tant que capteurs radar et orientés vers un éventail d'épandage généré par la machine d'épandage (10) par l'éjection de produit d'épandage.

2. Procédé selon la revendication 1,
**caractérisé par** au moins l'une des étapes suivantes :
- détection d'un comportement en vol de consigne du produit d'épandage, en particulier pendant le processus d'étalonnage ;
la détermination de la plage de valeurs de consigne (24a-24g) étant effectuée pour chacun des plusieurs capteurs (14a-14 g, 16a-16g) en tenant compte du comportement en vol de consigne détecté.

3. Procédé selon la revendication 2,
**caractérisé en ce que** la détection du comportement en vol de consigne du produit d'épandage comprend l'étape suivante :
- détection d'un angle d'éjection de consigne du produit d'épandage ;
la détermination de la plage de valeurs de consigne (24a-24g) étant effectuée pour chacun des plusieurs capteurs (14a-14 g, 16a-16g) en tenant compte de l'angle d'éjection de consigne détecté du produit d'épandage.

4. Procédé selon la revendication 2 ou 3,
**caractérisé en ce que** la détection du comportement en vol de consigne du produit d'épandage comprend au moins l'une des étapes suivantes :
- détection d'une direction du vent et/ou d'une force du vent actuelles ;
- détection d'une inclinaison de la surface agricole utile actuellement parcourue par la machine d'épandage (10) agricole et/ou d'une inclinaison actuelle de la machine d'épandage (10) agricole ;
la détermination de la plage de valeurs de consigne (24a-24g) étant effectuée pour chacun des plusieurs capteurs (14a-14 g, 16a-16g) en tenant compte de la direction du vent et/ou de la force du vent actuelles détectées et/ou de l'inclinaison détectée de la surface agricole utile actuellement parcourue par la machine d'épandage (10) agricole et/ou de l'inclinaison actuelle de la machine d'épandage (10) agricole.

5. Procédé selon l'une des revendications précédentes,
**caractérisé par** l'étape de :
- détection d'une quantité d'épandage réglée et/ou réelle du produit d'épandage, en particulier pendant le processus d'étalonnage ;
la détermination de la plage de valeurs de consigne (24a-24g) étant effectuée pour chacun des plusieurs capteurs (14a-14 g, 16a-16g) en tenant compte de la quantité d'épandage réglée et/ou réelle détectée du produit d'épandage.

6. Procédé selon l'une des revendications précédentes,
**caractérisé en ce que** la détermination de la plage de valeurs de consigne (24a-24g) pour chacun des plusieurs capteurs (14a-14 g, 16a-16g) comprend au moins l'une des étapes suivantes :
- détermination d'une fonction de valeurs de consigne (26) sur la base des valeurs mesurées (22a-22g) des plusieurs capteurs (14a-14 g, 16a-16g) enregistrées pendant le processus d'étalonnage ;
- détermination de la plage de valeurs de consigne (24a-24g) pour chacun des plusieurs capteurs (14a-14 g, 16a-16g) sur la base de la valeur de consigne (28a-28g) définie par la fonction de valeurs de consigne (26) pour chacun des plusieurs capteurs (14a-14 g, 16a-16g) et d'une plage de tolérance pour un écart tolérable de la valeur de consigne (28a-28g) respective.

7. Procédé selon l'une des revendications précédentes,
**caractérisé par** l'étape de :
- calcul d'une plage de valeurs de consigne (24a-24g) adaptée s'écartant de la plage de valeurs de consigne (24a-24g) déterminée pendant le processus d'étalonnage pour chacun des plusieurs capteurs (14a-14 g, 16a-16g) sur la base des plages de valeurs de consigne (24a-24g) déterminées pendant le processus d'étalonnage et en tenant compte d'une modification des réglages d'épandage de la machine d'épandage (10) agricole influençant le comportement en vol du produit d'épandage éjecté.

8. Procédé selon l'une des revendications précédentes,
**caractérisé en ce que** la surveillance des valeurs mesurées (22a-22g) enregistrées par les plusieurs capteurs (14a-14 g, 16a-16g) est effectuée aussi concernant la durée de la sortie de la plage de valeurs de consigne (24a-24g) déterminée pour le capteur (14a- 14 g, 16a-16g) respectif.

9. Procédé selon l'une des revendications précédentes,
**caractérisé par** au moins l'une des étapes suivantes :
- émission d'une indication d'encrassement, lorsqu'une valeur mesurée (22a-22g) surveillée d'un capteur (14a-14 g, 16a-16g) sort de la plage de valeurs de consigne (24a-24g) ;
- émission d'une demande d'exécution d'un nettoyage de capteur, lorsqu'une valeur mesurée (22a-22g) surveillée d'un capteur (14a-14 g, 16a-16g) sort de la plage de valeurs de consigne (24a-24g) ;
- activation automatique d'un dispositif de nettoyage de capteur de la machine d'épandage (10) agricole par un dispositif d'épandage de la machine d'épandage (10) agricole, lorsqu'une valeur mesurée (22a-22g) surveillée d'un capteur (14a-14 g, 16a-16g) sort de la plage de valeurs de consigne (24a-24g).

10. Procédé selon l'une des revendications précédentes,
**caractérisé par** au moins l'une des étapes suivantes :
- désactivation automatique d'un capteur dont la valeur mesurée (22a-22g) surveillée sort de la plage de valeurs de consigne (24a-24g) ;
- ajustement automatique d'une commande et/ou d'une régulation basées sur les valeurs mesurées (22a-22g) des capteurs (14a-14 g, 16a-16g) du point d'alimentation du produit d'épandage sur un disque d'épandage (12a, 12b) de la machine d'épandage (10) agricole pour la compensation d'un encrassement de capteur, lorsqu'une valeur mesurée (22a-22g) surveillée d'un capteur (14a-14 g, 16a-16g) sort de la plage de valeurs de consigne (24a-24g) ;
- désactivation automatique d'une commande et/ou d'une régulation basées sur les valeurs mesurées (22a-22g) des capteurs (14a-14 g, 16a-16g) du point d'alimentation du produit d'épandage sur un disque d'épandage (12a, 12b) de la machine d'épandage (10) agricole, lorsqu'une valeur mesurée (22a-22g) surveillée d'un capteur (14a-14 g, 16a-16g) sort de la plage de valeurs de consigne (24a-24g).

11. Procédé selon l'une des revendications précédentes,
**caractérisé par** au moins l'une des étapes suivantes :
- détermination d'une correction de valeur mesurée compensant un encrassement de capteur ;
- correction des valeurs de capteur d'un capteur (14a-14 g, 16a-16g) encrassé au moyen de la correction de valeur mesurée déterminée.

12. Procédé selon l'une des revendications précédentes,
**caractérisé par** l'étape de :
- comparaison des valeurs mesurées (22a-22g) enregistrées avant et après un nettoyage d'au moins un capteur (14a-14 g, 16a-16g) par l'au moins un capteur (14a-14 g, 16a-16g) pour l'identification d'un succès de nettoyage ou d'un défaut de capteur par le dispositif d'évaluation (20).

13. Machine d'épandage (10) agricole, comportant
- plusieurs capteurs (14a-14 g, 16a-16g), lesquels sont configurés pour enregistrer des valeurs mesurées (22a-22g), lesquelles concernent le comportement en vol du produit d'épandage éjecté ;
**caractérisée par** des capteurs (14a-14 g, 16a-16g), lesquels sont réalisés en tant que capteurs radar et orientés vers un éventail d'épandage généré par la machine d'épandage (10) par l'éjection de produit d'épandage et par un dispositif d'évaluation (20), lequel est configuré pour déterminer une plage de valeurs de consigne (24a-24g) pour chacun des plusieurs capteurs (14a-14 g, 16a-16g) pendant un processus d'étalonnage lors de l'éjection de produit d'épandage sur une surface agricole utile et pour surveiller les valeurs mesurées (22a-22g) enregistrées par les plusieurs capteurs (14a-14 g, 16a-16g) concernant la sortie de la plage de valeurs de consigne (24a-24g) déterminée pour le capteur (14a-14 g, 16a-16g) respectif afin d'identifier un encrassement de capteur.

14. Machine d'épandage (10) agricole selon la revendication 13,
**caractérisée par** un dispositif d'évaluation, lequel est configuré pour émettre une indication d'encrassement et/ou une demande d'exécution d'un nettoyage de capteur, lorsqu'une valeur mesurée (22a-22g) surveillée d'un capteur (14a-14 g, 16a-16g) sort de la plage de valeurs de consigne (24a-24g).

15. Machine d'épandage (10) agricole selon l'une des revendications 13 à 14,
**caractérisée en ce que** la machine d'épandage (10) agricole est configurée pour exécuter le procédé permettant la détermination de l'état d'encrassement d'au moins un capteur (14a-14 g, 16a-16g) selon l'une quelconque des revendications 2 à 12.
